(19) Europäisches Patentamt / European Patent Office / Office européen des brevets

(11) **EP 4 432 538 A1**

(12) **EUROPEAN PATENT APPLICATION**

(43) Date of publication:
**18.09.2024 Bulletin 2024/38**

(21) Application number: **23161481.9**

(22) Date of filing: **13.03.2023**

(51) International Patent Classification (IPC):
*H02M 1/34* $^{(2007.01)}$

(52) Cooperative Patent Classification (CPC):
**H02M 1/344**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hitachi Energy Ltd
8050 Zürich (CH)**

(72) Inventor: **Asoodar, Mohsen
171 71 Solna (SE)**

(74) Representative: **AWA Sweden AB
Box 45086
104 30 Stockholm (SE)**

(54) **APPARATUS HAVING SERIES-CONNECTED SWITCHING DEVICES AND RELATED METHOD**

(57)    An apparatus (100) is disclosed, comprising a plurality of interconnected switching devices (1, 2), at least two of which are connected in series so as to form at least one series-connection of switching devices (1, 2; 18, 19), and a plurality of switching device voltage balancing circuits, VBCs, (3, 4) for balancing of voltages over the switching devices of the at least one series-connection of switching devices during and after switching the switching devices from a first operational state to a second operational state. Each of the plurality of switching device VBCs (3, 4) comprises an electrical energy storage, EES, module (6, 7) which can be controllably charged or discharged. Each of the plurality of switching device VBCs (3, 4) corresponds to a respective switching device (1, 2) of the at least one series-connection of switching devices (1, 2). For each series-connection of switching devices, timing of switching the switching devices (1, 2) of the series-connection of switching devices between the operational states in relation to each other and/or timing of charging and/or discharging the EES modules (6, 7) of the respective ones of the switching device VBCs (3, 4) corresponding to the switching devices (1, 2) of the series connection of switching devices is/are controlled based on one or more values indicative of the voltage of each of the EES modules (6, 7) such that any differences between the voltages of the EES modules (6, 7) are decreased.

*Fig. 1*

EP 4 432 538 A1

## Description

### TECHNICAL FIELD

The present invention relates to an apparatus comprising a plurality of switching devices, such as semiconductor-based switching devices, connected in series, and to a method in such an apparatus.

### BACKGROUND

In applications such as power transmission applications it may be desired to connect a plurality of switching devices, such as semiconductor-based switching devices, in series. One application where it may be desired to connect a plurality of switching devices in series is modular multilevel converters (MMCs). For example, in cascaded half-bridge MMCs, half-bridge submodules of the MMC are connected in series.

In general, connecting semiconductor-based switching devices in series has several advantages, such as (i) facilitating of allowing for creating a standardized solution with variable semiconductor device voltage, (ii) facilitating of allowing for using use relatively cheap semiconductor devices in order to make a high-power apparatus, (iii) facilitating for or allowing to create a reliable module with potential redundancies that reduce the downtime of the apparatus (e.g., a converter), and (iv) simplifying any system for protection of the apparatus, as the protection system can be slower and is only required to handle lower levels of energy as compared using another type of connection of the semiconductor-based switching devices than a series-connection. However, for semiconductor-based switching devices connected in series, it may be difficult to ensure that voltage over the semiconductor-based switching devices connected in series is shared equally between the switching devices during switching transients.

### SUMMARY

When semiconductor-based switching devices are connected in series, the voltage sharing between the switching devices may not occur naturally. Some solutions for addressing this, based on employing very fast dynamic feedback systems, have been proposed in the art. However, such solutions are not considered practical or as reliable solutions for industrial applications. Moreover, such solutions are generally not easily scalable or not scalable at all.

It is contemplated that the main causes for voltage mismatch between series-connected semiconductor-based switching devices during switching transients, i.e., for unequal voltages of the semiconductor-based switching devices during switching transients, are: (1) delay in the switching command to one or more semiconductor-based switching devices in relation to another or other semiconductor-based switching devices; (2) different characteristics, or spread in parameters, between different semiconductor-based switching devices; and (3) parasitic elements in the apparatus or system including the series-connected semiconductor-based switching devices. The aspects (2) and (3) may be very complicated to compensate for in practice. If left uncontrolled, the voltage over series-connected semiconductor-based switching devices may become unbalanced and diverge over time.

In view of the foregoing, a concern of the present invention is to provide means for facilitating or allowing for reducing or even avoiding the risk, in an apparatus including switching devices connected in series, of the voltage over the series-connected switching devices becoming unbalanced and diverging over time.

To address at least one of this concern and other concerns, an apparatus and a method in accordance with the independent claims are provided. Preferred embodiments are defined by the dependent claims.

According to a first aspect of the present invention, an apparatus is provided. The apparatus comprises a plurality of interconnected switching devices each of which is controllably switchable between operational states including at least a conducting state and a non-conducting state. At least two of the switching devices are connected in series so as to form at least one series-connection of switching devices. The apparatus is connected or connectable in a conductive path for conveying a current in the conductive path via the at least one series-connection of switching devices. The apparatus comprises a plurality of switching device voltage balancing circuits (VBCs) for balancing of voltages over (or of) the switching devices of the at least one series-connection of switching devices during and after switching the switching devices from a first operational state to a second operational state. Each of plurality of switching device VBCs comprises an electrical energy storage (EES) module which can be (e.g., controllably) charged or discharged. Each of the plurality of switching device VBCs corresponds to and is connected to a respective switching device of the at least one series-connection of switching devices. The apparatus comprises at least one control module. The at least one control module is configured to control switching of each switching device of the at least one series-connection of switching devices between the operational states and control operation of the plurality of switching device VBCs at least with respect to charging or discharging the corresponding EES module. The at least one control module is configured to, for each series connection of switching devices of the at least one series-connection of switching devices: obtain one or more values indicative of the voltage of each of the EES modules; and based on the obtained values, control at least one of: (i) timing of switching the switching devices of the series connection of switching devices between the operational states in relation to each other or (ii) timing of charging and/or discharging the EES modules of the respective ones of the switching device VBCs corresponding to the switching devices of the series connection of switching devices, such that any differences between the voltages of the EES modules of the switching device VBCs are decreased, wherein the switching device VBCs are connected to the respective switching devices of the series connection of switching devices such that any differences between the voltages of the switching devices of the series connection of switching devices in turn are decreased.

According to a second aspect of the present invention, a method in an apparatus is provided. The apparatus comprises a plurality of interconnected switching devices each of which is controllably switchable between operational states including at least a conducting state and a non-conducting state. At least two of the switching devices are connected in series so as to form at least one series-connection of switching devices. The apparatus is connected or connectable in a conductive path for conveying a current in the conductive path via the at least one series-connection of switching devices. The apparatus comprises a plurality of switching device VBCs for balancing of voltages over the switching devices of the at least one series-connection of switching devices during and after switching the switching devices from a first operational state to a second operational state. Each of the plurality of switching device VBCs comprises an EES module which can be (e.g., controllably) charged or discharged. Each of the plurality of switching device VBCs corresponds to and is connected to a respective switching device of the at least one series-connection of switching devices.

The method according to the second aspect of the present invention comprises, for each series connection of switching devices of the at least one series-connection of switching devices: obtaining one or more values indicative of the voltage of each of the EES modules; and, based on the obtained values, controlling at least one of: (i) timing of switching the switching devices of the series connection of switching devices between the operational states in relation to each other or (ii) timing of charging and/or discharging the EES modules of the respective ones of the switching device VBCs corresponding to the switching devices of the series connection of switching devices, such that any differences between the voltages of the EES modules of the switching device VBCs are decreased, wherein the switching device VBCs are connected to the respective switching devices of the series connection of switching devices such that any differences between the voltages of the switching devices of the series connection of switching devices thereby are decreased.

While the electrical energy storage module may be referred to herein as a capacitor, it is to be understood that more than one capacitor and/or another or other types of electrical energy storage modules than capacitors may possibly be used. Thus, even if the electrical energy storage module may be referred to herein as a capacitor, the disclosure herein may be applicable in the same way or similarly for other types of electrical energy storage modules than capacitors.

By controlling one or more of the above-mentioned aspects (i) and (ii) such that any differences between the voltages of the EES modules of the switching device VBCs are decreased, voltages over (or of) the switching devices of the at least one series-connection of switching devices may become balanced (e.g., so that the switching devices have equal or substantially equal voltage) during and after switching the switching devices from a first operational state to a second operational state, e.g., from a conducting state to a non-conducting state. As mentioned, the switching device VBCs are connected to the respective switching devices of the series connection of switching devices such that any differences between the voltages of the switching devices of the series connection of switching devices - by said controlling - are decreased. For example, each of the plurality of switching device VBCs may be connected in parallel with the respective switching device of the at least one series-connection of switching devices. By said controlling, possible delays in the switching command to one or more switching devices of the at least one series-connection of switching devices in relation to another or other switching devices of the at least one series-connection of switching devices due to voltage mismatch between the switching devices during switching transients may be identified and compensated for in the next switching instance. Said controlling may be implemented as a closed loop control.

Each or any of the plurality of switching device VBCs may comprise resistive circuitry. The resistive circuitry may comprise at least one resistor. Each or any of the plurality of switching device VBCs may be configured to selectively and controllably discharge current from its corresponding EES module through the resistive circuitry in order to reduce the voltage of the EES module. For each or any of the plurality of switching device VBCs, on a condition that the voltage of the EES module of the switching device VBC exceeds a selected threshold voltage level, the switching device VBC may be controlled to discharge current from its corresponding EES module to the at least one resistor of the resistive circuitry such that the voltage of the EES module is reduced so as to be below the selected threshold voltage level. For example, the at least one control module may be configured to carry out the controlling of the switching device VBC to discharge current from its corresponding EES module. The selected threshold voltage level may for example be the same for each switching device VBC. By such controlling of the switching device VBCs to discharge current from their corresponding EES modules, it may be ensured that the voltage over each switching device of the at least one series-connection of switching devices does not go beyond a certain value. Thus, by means of said controlling of the switching device VBCs to discharge current from their corresponding EES modules, the maximum voltage that each switching device of the at least one series-connection of switching devices may be subjected to can be controlled, or limited. The maximum voltage may be governed by the selected threshold voltage level.

By controlling one or more of the above-mentioned aspects (i) and (ii) such that any differences between the voltages of the EES modules of the switching device VBCs are decreased and by said controlling of the switching device VBCs to discharge current from their corresponding EES modules, voltages over (or of) the switching devices of the at least one series-connection of switching devices may become equal or substantially equal during and after switching the switching devices from a first operational state to a second operational state, e.g., from a conducting state to a non-conducting state. Said controlling may be implemented as a closed loop control.

The balancing and/or limiting of voltages over the switching devices of the at least one series-connection of switching devices during and after switching the switching devices from a first operational state to a second operational state can be carried out regardless of the cause of any voltage mismatch between the series-connected switching devices during switching transients. Further, the apparatus is easily scalable to in principle any number of series-connected switching devices.

The EES module of each switching device VBC may 'contain' the switching transients of the corresponding switching device. In other words, the EES modules of the respective ones of the switching device VBCs may isolate the switching transients of each switching device from the other switching devices. Hence, in the presence of parasitic elements in the apparatus and different characteristics, or spread in parameters, between different switching devices, any voltage mismatch between the series-connected switching devices after every switching instance may be reduced. By means of the provisioning of the EES module of each switching device VBC, there may be no or only very little need for actively compensating for the dynamics of switching the switching devices between different operational states, for delays in the switching commands to one or more switching devices in relation to another or other switching devices, for different characteristics or spread in parameters between different ones of the switching devices, and for any parasitic elements in the apparatus. Instead, the voltage (e.g., the average voltage) of the EES module of each switching device VBC may be actively controlled, which may be easier than said active compensation.

The obtaining of one or more values indicative of the voltage of each of the EES modules, for each series connection of switching devices of the at least one series-connection of switching devices, may include obtaining one or more values indicative of the voltage of each of the EES modules at a plurality of different time instants. For example, the one or more values indicative of the voltage of each of the EES modules may be obtained by receiving or retrieving the one or more values indicative

of the voltage of each of the EES modules from some entity, e.g., one or more voltage sensors configured to sense voltage of the EES modules. Thus, the one or more values 'indicative' of the voltage of each of the EES modules may possibly be one or more values of the voltage of each of the EES modules, but could also be some value(s) from which the voltage of each of the EES modules may be derived or estimated.

The apparatus may be employed in different applications. For example, the apparatus may be employed in or be included in a converter configured to convert direct current (DC) power to alternating current (AC) power, or AC power to DC power. The plurality of interconnected switching devices may for example be comprised in a modular multilevel converter (MMC). In a cascaded half-bridge or full-bridge MMC, half-bridge or full-bridge submodules of the MMC are connected in series. The plurality of interconnected switching devices may for example be comprised in half-bridge or full-bridge submodules of an MMC.

In the context of the present application, by a non-conducting state of the switching device it is meant a state where there is no or only very little conduction of current through the switching device. Thus, the switching device may be switchable so as to stop, or substantially stop, the switching device from conducting current through the switching device.

Each or any of the switching devices may be of a type comprising more than two terminals. For example, each or any of the switching devices may for example comprise at least a first terminal and a second terminal, and may be arranged such that current flows in a current path of the switching device between the first terminal and the second terminal at least when the switching device is in the conducting state. Each of the plurality of switching device VBCs may be connected to the first and second terminals (if any) of the corresponding switching device.

The apparatus may for example comprise more than one series-connection of switching devices. For example, the apparatus may comprise at least two series-connections of switching devices, with the at least two series-connections of switching devices being connected in parallel.

At least one switching device of the at least one series-connection of switching devices may comprise a plurality of sub-switching devices connected in parallel. Each of the sub-switching devices may be controllably switchable between operational states including at least a conducting state and a non-conducting state.

Each or any of the switching devices, sub-switching devices or switching elements described herein may for example comprise or be constituted by at least one of: one or more field-effect transistors (FETs), one or more bipolar junction transistors (BJTs), or one or more insulated-gate bipolar transistors (IGBTs), or one or more of other types of semiconductive switches. The one or more FETs may for example comprise one or more metal-oxide semiconductor FETs (MOSFETs).

Each of the plurality of switching device VBCs may comprise a first one-way conducting circuitry and a second one-way conducting circuitry, which second one-way conducting circuitry may be connected in parallel with the first one-way conducting circuitry. The parallel connection of the first one-way conducting circuitry and the second one-way conducting circuitry may be connected in series with the EES module of the switching device VBC. The first one-way conducting circuitry and the second one-way conducting circuitry may be configured to conduct current in opposite directions. One of the first one-way conducting circuitry and the second one-way conducting circuitry may comprise at least one resistor.

As mentioned in the foregoing, each or any of the plurality of switching device VBCs may comprise resistive circuitry, which resistive circuitry may comprise at least one resistor. The resistive circuitry may be the same as the one of the first one-way conducting circuitry and the second one-way conducting circuitry comprising at least one resistor. Thus, the resistive circuitry may be referred to as the one of the first one-way conducting circuitry and the second one-way conducting circuitry, or vice versa.

One of the first one-way conducting circuitry and the second one-way conducting circuitry may be configured to selectively and controllably permit current to be conducted through the first one-way conducting circuitry or second one-way conducting circuitry, respectively.

The one of the first one-way conducting circuitry and the second one-way conducting circuitry may comprise a series connection of at least one switching element and at least one resistor. Each of the at least one switching element may be controllably switchable between operational states including at least a conducting state and a non-conducting state. Switching of the at least one switching element between the operational states may be controlled, e.g., by the at least one control module which may be suitably configured to that end.

The first one-way conducting circuitry and the second one-way conducting circuitry may be arranged in relation to the EES module of the switching device VBC so that by switching the at least one switching element between different operational states, the EES module of the switching device VBC can be selectively and controllably discharged via the one of the first one-way conducting circuitry and the second one-way conducting circuitry and selectively and controllably charged via the other one of the first one-way conducting circuitry and the second one-way conducting circuitry. Thereby, timing of charging and/or discharging the EES module of the switching device VBC may be controllable, e.g., by the at least one control module.

According to a third aspect of the present invention, a computer program is provided. The computer program comprises instructions, which when executed by one or more processors comprised in at least one control module, cause the at least one control module to perform a method according to the second aspect of the present invention.

According to a fourth aspect of the present invention, a processor-readable medium is provided. The processor-readable medium has a computer program loaded thereon, wherein the computer program comprises instructions, which when executed by one or more processors comprised in at least one control module, cause the at least one control module to perform a method according to the second aspect of the present invention.

The at least one control module may for example include or be constituted by any suitable central processing unit (CPU), microcontroller, digital signal processor (DSP), Application Specific Integrated Circuit (ASIC), Field Programmable Gate Array (FPGA), etc., or any combination thereof. The at least one control module may optionally be capable of executing software instructions stored in a computer program product, e.g., in the form of a memory. The memory may for example be any combination of read and write memory (RAM) and read only memory (ROM). The memory may comprise persistent storage, which for example can be a magnetic memory, an optical memory, a solid-state memory or a remotely mounted memory, or any combination thereof.

Each or any of the one or more processors may for example comprise a CPU, a microcontroller, a DSP, an ASIC, an FPGA, etc., or any combination thereof.

The processor-readable medium may for example include a Digital Versatile Disc (DVD) or a floppy disk or any other suitable type of processor-readable means or processor-readable (digital) medium, such as, but not limited to, a memory such as, for example, nonvolatile memory, a hard disk drive, a Compact Disc (CD), a Flash memory, magnetic tape, a Universal Serial Bus (USB) memory device, a Zip drive, etc.

Further objects and advantages of the present invention are described in the following by means of exemplifying embodiments. It is noted that the present invention relates to all possible combinations of features recited in the claims. Further features of, and advantages with, the present invention will become apparent when studying the appended claims and the description herein. Those skilled in the art realize that different features of the present invention can be combined to create embodiments other than those described herein.

BRIEF DESCRIPTION OF THE DRAWINGS

Exemplifying embodiments of the present invention will be described below with reference to the accompanying drawings.

Figures 1 to 5 are schematic views of an apparatus according to embodiments of the present invention. Figure 6 is a schematic flowchart illustrating a method according to an embodiment of the present invention.

Figure 7 is a schematic view of an apparatus according to an embodiment of the present invention.

All the figures are schematic, not necessarily to scale, and generally only show parts which are necessary in order to elucidate embodiments of the present invention, wherein other parts may be omitted or merely suggested.

DESCRIPTION WITH REFERENCE TO THE DRAWINGS

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments are provided by way of example so that this disclosure will convey the scope of the present invention to those skilled in the art.

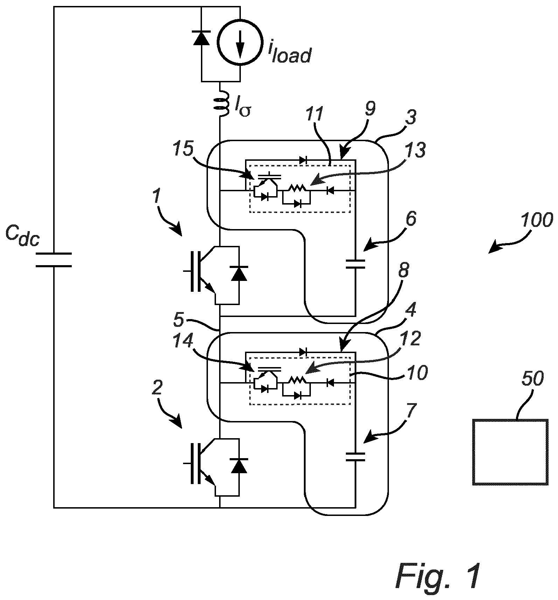

Figure 1 is a schematic view of an apparatus 100 according to an embodiment of the present invention. The apparatus 100 comprises a plurality of interconnected switching devices, wherein at least two of the switching devices are connected in series so as to form at least one series-connection of switching devices. Each of the switching devices is switchable between operational states including at least a conducting state and a non-conducting state. Each or any of the switching devices may for example comprise or be constituted by at least one of: one or more field-effect transistors (FETs), one or more bipolar junction transistors (BJTs), or one or more insulated-gate bipolar transistors (IGBTs), or one or more of other types of semiconductive switches. The one or more FETs may for example comprise one or more metal-oxide semiconductor FETs (MOSFETs).

In accordance with the embodiment of the present invention illustrated in Figure 1 (and also the embodiments of the present invention illustrated in the other figures), the apparatus 100 comprises two switching devices 1, 2 which are connected in series so as to form a series-connection of switching devices. However, it is to be understood that the number of switching devices in the apparatus according to the illustrated embodiments of the present invention is according to an example, and that the apparatus 100 may comprise in principle any number of switching devices (e.g., three, four, five, six, eight, ten, twenty, fifty, or a hundred or more), and which switching devices are connected in series so as to form at least one series-connection of switching devices. Thus, the switching devices in any embodiment of the present invention could be connected in series to form several series connections of switching device, such as, for example, two series-connections of switching devices, with different series-connections of switching devices for example being connected in parallel (for example, all series-connections of switching devices could be connected in parallel). It is to be understood that while reference may be made herein to "the at least one series-connection of switching devices 1, 2", or "series-connection of switching devices 1, 2", this is for description of exemplifying embodiments of the present invention and is not to be construed limiting and meaning that the apparatus 100 is limited to only including two switching devices.

Further, while the switching devices according to the illustrated embodiments of the present invention are constituted by single switching elements, other configurations are possible. For example, at least one switching device of the at least one series-connection of switching devices may comprise a plurality of sub-switching devices (or switching elements) connected in parallel, wherein each of the sub-switching devices may be controllably switchable between operational states including at least a conducting state and a non-conducting state. Each or any of such sub-switching devices may for example comprise or be constituted by at least one of: one or more FETs (e.g., MOSFETs), one or more BJTs, or one or more IGBTs, or one or more of other types of semiconductive switches.

As illustrated in Figure 1, the apparatus 100 is connected in a conductive path 5 for conveying a current in the conductive path 5 via the at least one series-connection of switching devices 1, 2. In one or more embodiments of the present invention, the apparatus 100 may be connectable in the conductive path 5. The conductive path 5 may be between a first node and a second node (not illustrated in Figure 1 or in any of the other figures), and the switching devices 1, 2 may be connected between the first and second nodes. The apparatus 100 may be connected or connectable in the conductive path 5 for conveying a current from the first node to the second node via the at least one series-connection of switching devices 1, 2. A voltage between the first node and the second node may be referred to as direct current (DC) link voltage. The current conveyed in the conductive path 5 may for example be derived or estimated based on a load current, $i_{load}$, as indicated in Figure 1.

The apparatus 100 comprises a plurality of switching device voltage balancing circuits (VBCs), each of which corresponds to and is connected to a respective switching device of the at least one series-connection of switching devices. Since in accordance with the embodiment of the present invention illustrated in Figure 1 (and also the embodiments of the present invention illustrated in the other figures), the apparatus 100 comprises two switching devices 1, 2 which are connected in series so as to form a series-connection of switching devices, the apparatus 100 illustrated in Figure 1 comprises two switching device VBCs 3, 4 which correspond to different ones of the switching devices 1, 2. As illustrated in Figure 1, in accordance with the illustrated embodiment, the switching device VBC 3 corresponds to the switching device 1, and the switching device VBC 4 corresponds to the switching device 2. However, if the apparatus 100 would comprise more than two switching devices, such as also described in the foregoing, the apparatus 100 would also comprise more than two switching device VBCs.

As has been described in the foregoing and as also will be further described in the following, the switching device VBCs 3, 4 are for balancing of voltages over (or of) the switching devices 1, 2 of the at least one series-connection of switching devices during and after switching the switching devices 1, 2 from a first operational state to a second operational state.

Generally, each of the plurality of switching device VBCs may be connected in parallel with the respective switching device of the at least one series-connection of switching devices. In accordance with the embodiment of the present invention illustrated in Figure 1, the switching device VBC 3 is connected in parallel with the switching device 1, and the switching device VBC 4 is connected in parallel with the switching device 2.

Each of the switching device VBCs 3, 4 comprises an electrical energy storage (EES) module 6, 7 which can be charged or discharged.

In accordance with the embodiment of the present invention illustrated in Figure 1, each of the switching device VBCs 3, 4 may comprise resistive circuitry which may comprise at least one resistor. As illustrated in Figure 1, the switching device VBC 3 comprises resistive circuitry 11 comprising a resistor 13, and the switching device VBC 4 comprises resistive circuitry 10 comprising a resistor 12.

Each of the plurality of switching device VBCs 3, 4 may be configured to selectively and controllably discharge current from its corresponding EES module 6, 7 through the resistive circuitry 10, 11 in order to reduce the voltage of the EES module 6, 7.

In accordance with the embodiment of the present invention illustrated in Figure 1, each of the switching device VBCs 3, 4, such as the resistive circuitry 10, 11 thereof, may further comprise at least one switching element which may be connected in series with the (at least one) resistor 12, 13. As illustrated in Figure 1, the resistive circuitry 11 of the switching device VBC 3 comprises a switching element 15 connected in series with the resistor 13, and the resistive circuitry 10 of the switching device VBC 4 comprises a switching element 14 connected in series with the resistor 12.

Each of the switching elements 14, 15 may be controllably switchable between operational states including at least a conducting state and a non-conducting state. Each or any of the switching elements 14, 15 may for example comprise or be constituted by at least one of: one or more FETs (e.g., MOSFETs), one or more BJTs, or one or more IGBTs, or one or more of other types of semiconductive switches.

In accordance with the embodiment of the present invention illustrated in Figure 1, each of the plurality of switching device VBCs 3, 4 comprises a first one-way conducting circuitry 8, 9 connected in parallel with respective ones of the resistive circuitry 10 and the resistive circuitry 11, which resistive circuitry 10 and the resistive circuitry 11 may be referred to as a second one-way conducting circuitry 10 and a second one-way conducting circuitry 11. As illustrated in Figure 1, the switching device VBC 3 comprises a first one-way conducting circuitry 9 connected in parallel with the resistive circuitry 11, and the switching device VBC 4 comprises a first one-way conducting circuitry 8 connected in parallel with the resistive circuitry 10. For each of the plurality of switching device VBCs 3, 4, the parallel connection of the first one-way conducting circuitry 8, 9 and the second one-way conducting circuitry 10, 11 is connected in series with the EES module 6, 7 of the switching device VBC 3, 4, and wherein the first one-way conducting circuitry 8, 9 and the second one-way conducting circuitry 10, 11 (or resistive circuitries 10 and 11) are configured to conduct current in opposite directions. As illustrated in Figure 1, to that end, the first one-way conducting circuitry 8, 9 and the second one-way conducting circuitry 10, 11 may comprise respective diodes, wherein the diode(s) of the first one-way conducting circuitry 8, 9 and the diode(s) of the second one-way conducting circuitry 10, 11 may be anti-parallel in relation to each other.

In accordance with the embodiment of the present invention illustrated in Figure 1, for each of the plurality of switching device VBCs 3, 4, the second one-way conducting circuitry 10, 11 (or resistive circuitries 10 and 11) is configured to selectively and controllably permit current to be conducted therethrough. As illustrated in Figure 1, this is achievable by means of the provisioning of the switching elements 14 and 15 in the second one-way conducting circuitries 10 and 11, respectively.

Further in accordance with the embodiment of the present invention illustrated in Figure 1 and as indicated in the foregoing, for each of the plurality of switching device VBCs 3, 4, the second one-way conducting circuitry 10, 11 (or resistive circuitries 10 and 11) comprises a series connection of the switching element 14, 15 and the resistor 12, 13. As mentioned, each of the switching elements 14, 15 is controllably switchable between operational states including at least a conducting state and a non-conducting state.

As mentioned, each of the switching devices 1, 2 is switchable between operational states including at least a conducting state and a non-conducting state. For example, each of the switching devices 1, 2 may comprise at least a first terminal, a second terminal, and a third terminal and being arranged such that current may flow in a current path between the first terminal and the second terminal, and further such that the third terminal governs the electrical conductivity of the current path between the first terminal and the second terminal based on voltage at the third terminal relatively to the voltage at the second terminal. Each of the switching devices 1, 2 may be arranged such that current flows unimpeded from the first terminal to the second terminal in the current path between the first terminal and the second terminal if the voltage at the third terminal relatively to the voltage at the second terminal is within a predefined switching device threshold voltage range. For example, if each or any of the switching devices 1, 2 comprises a FET, the predefined switching device threshold voltage range may be defined by a threshold voltage of the FET. In alternative or in addition, if each or any of the switching devices 1, 2 comprises a BJT, the predefined switching device threshold voltage range may be defined by a threshold voltage of the BJT. In alternative or in addition, if each or any of the switching devices 1, 2 comprises a an IGBT, the predefined switching device threshold voltage range may be defined by a threshold voltage of the IGBT.

Thus, each of the switching devices 1, 2 may be switchable between operational states including at least a conducting state and a non-conducting state for example by means of providing a voltage pulse altering the voltage at the third terminal of the switching device relatively to the voltage at the second terminal of the switching device. In general, each of the switching devices 1, 2 may be switchable between operational states for example by being provided with a switching command to switch into the non-conducting state, which may be referred to as a turn-off switching command, or a switching command to switch into the conducting state, which may be referred to as a turn-on switching command. The switching command(s) may, e.g., comprise a voltage pulse as described in the foregoing. In the following the terms turn-off switching command and turn-on switching command may be used in relation to describe the switching of the switching devices 1, 2 between different operational states such as into the non-conducting state or into the conducting state, with no loss of generality.

The capacitor illustrated in Figure 1 which is connected in parallel with the switching devices 1, 2, indicated by its capacitance $c_{dc}$, may be referred to as a (main) DC link capacitor.

In accordance with the embodiment of the present invention illustrated in Figure 1, the charging and discharging of each of the EES module 6 and the EES module 7 is governed by the switching instance of the switching devices 1, 2 (i.e., which operational state the switching devices 1, 2 are switched into), the current in the conductive path 5, and the direction of conduction of current through the switching device VBCs 3, 4 (which may be governed by the switching instance of the switching elements 14, 15, i.e., which operational state the switching elements 14, 15 are switched into).

The different instances of voltage rise and voltage fall during the turn-off and turn-on events for the switching devices 1, 2 may create unequal voltages of the switching devices 1, 2. This may be irrespective of the cause of the different voltage rise/fall instances. The different turn-on and turn-off instances for the switching devices 1, 2 can be controlled by controlling the time at which the switching commands to the switching devices 1, 2 are provided. The effect of different switching instances for the switching devices 1, 2 on the voltages of the EES module 6 and the EES module 7 are described in the following.

When a turn-off switching command is provided to both of the switching devices 1, 2, the two switching devices 1, 2 may turn off (i.e., attain the non-conducting state) at slightly different times. Assuming that the switching device 1 turns off before the switching device 2, and that the current in the conductive path 5 is positive, the voltage of the EES module 6 will conduct the current until the switching device 2 has been turned off as well. The time delay between the instances of voltage rises between the two switching devices 1, 2 together with the current in the conductive path 5 at the time of switching defines a difference between the voltage $V_1$ of the EES module 6 and the voltage $V_2$ of the EES module 7 at the end of the turn off. The time delay can be defined by a time difference between two time instants $t_1$ and $t_2$. Specifically, the difference between the voltage $V_1$ of the EES module 6 and the voltage $V_2$ of the EES module 7 after the turn-off is governed by the following relation between $V_1$, $V_2$ and the current $i_c$ in the conductive path 5:

$$V_1 - V_2 = \frac{1}{c} \int_{t_1}^{t_2} i_c(t)dt$$

In this relation, it has been assumed that $i_c > 0$ and $t_2 > t_i$, that each of the EES module 6 and the EES module 7 is a capacitor, and that the capacitance of the EES module 6 and the capacitance of the EES module 7 are the same and equal to c. However, it is to be understood that the above relation is intended to describe principles of one or more embodiments of the present invention, and that it is not required for the capacitance of the EES module 6 and the capacitance of the EES module 7 to be the same. Simulations carried out by the inventor have shown that a difference between the capacitance of the EES module 6 and the capacitance of the EES module 7 of up to at least 20% is acceptable.

The current $i_c$ in the conductive path 5 may for example be sensed directly by means of one or more current sensors (not shown in Figure 1) configured to sense the current in the conductive path 5. In alternative or in addition, the current $i_c$ in the conductive path 5 could be derived or estimated based on one or more current sensors (not shown in Figure 1) configured to sense the load current $i_{load}$ which is indicated in Figure 1. The load current $i_{load}$ may be representative of a current of an electrical load or device connected or connectable to the apparatus 100.

Aside from the voltage differences between the voltage of the EES module 6 and the voltage of the EES module 7, after every turn-off of the switching devices 1, 2, the energy of the stray inductance, represented by $I_\sigma$

in Figure 1, will be buffered in the EES module 6 and the EES module 7 as well. This energy buffering occurs after all of the switching devices 1, 2 have been turned off. Hence, the transfer of energy from $I_\sigma$ to the EES module 6 and the EES module 7 may create a common mode voltage rise (equal voltage rise among all of the EES module 6 and the EES module 7). In fact, the EES module 6 and the EES module 7 together with any parasitic inductance of the conductive path 5 may create a natural boost converter. Hence, in absence of the resistive current paths in the switching device VBCs 12, 13, uncontrolled voltages on the EES module 6 and the EES module 7 may be increasing after every turn off (assuming that the EES module 6 and the EES module 7 are low in losses, which is a reasonable assumption).

Similar to the turn off case, a different turn-on instance can cause a voltage difference between the voltage of the EES module 6 and the voltage of the EES module 7. For instance, if the switching device 1 is turned on earlier than the switching device 2, the voltage difference between the voltage of the EES module 6 and the voltage of the EES module 7 is governed by the following relation:

$$V_1 - V_2 = -\frac{1}{c}\int_{t_1}^{t_2} i_c(t)dt$$

Again, it has been assumed that $i_c > 0$ and $t_2 > t_1$, that each of the EES module 6 and the EES module 7 is a capacitor, and that the capacitance of the EES module 6 and the capacitance of the EES module 7 are the same and equal to c.

In both cases, the voltage of the EES module 6 and the voltage of the EES module 7 would be increasing. In the turn off, the voltage of the EES module 6 increases and in the turn on the voltage of the EES module 7 increases. Hence, as long as the current in the conductive path 5 is positive, both the voltage of the EES module 6 and the voltage of the EES module 7 will increase until at least one of them takes on the entire voltage of the conductive path 5 (e.g., the DC link voltage). In practice, the situation may be even more complex. The turn-on and turn-off delays are not necessarily the same. Also, these values can change over time, and may be different from one particular system to another.

One or more embodiments of the present invention address these issues and facilitate or allow for balancing of voltages over (or of) the switching devices 1, 2 of the at least one series-connection of switching devices during and after switching the switching devices 1, 2 from a first operational state to a second operational state.

The apparatus 100 comprises at least one control module. In accordance with the embodiment of the present invention illustrated in Figure 1, the apparatus comprises one control module 50. Generally, the control module 50 (and/or any further control module which may be included in the apparatus 100) may be connected to the switching devices of the at least one series-connection of switching devices and to the plurality of switching device VBCs for controlling operation thereof. The connection between the control module(s) 50 and the at least one series-connection of switching devices and the plurality of switching device VBCs, respectively, may for example be implemented or realized by any appropriate wired and/or wireless communication means (e.g., any appropriate wired and/or wireless communication means as known in the art) allowing for sending control messages, commands, instructions, etc., between the control module(s) 50 and the at least one series-connection of switching devices and the plurality of switching device VBCs, respectively.

The control module 50 is configured to control switching of each switching device 1, 2 of the at least one series-connection of switching devices 1, 2 between the operational states and control operation of the plurality of switching device VBCs 3, 4 at least with respect to charging or discharging the corresponding EES module 6, 7.

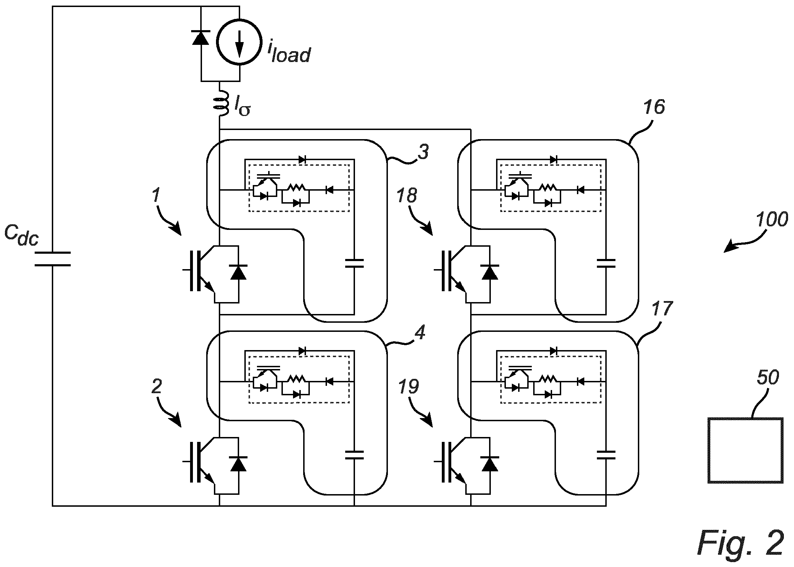

According to embodiment of the present invention illustrated in Figure 1 there is one series-connection of switching devices 1, 2. However, there could be provided more than one series-connection of switching devices in the apparatus 100, for example such as illustrated in Figure 2.

The control module 50 is configured to, for the series-connection of switching devices 1, 2, obtain one or more values indicative of the voltage of each of the EES modules 6, 7. The obtaining of one or more values indicative of the voltage of each of the EES modules 6, 7 may include obtaining one or more values indicative of the voltage of each of the EES modules 6, 7 at a plurality of different time instants. For example, the one or more values indicative of the voltage of each of the EES modules 6, 7 may be obtained by receiving or retrieving the one or more values indicative of the voltage of each of the EES modules 6, 7 from some entity, e.g., one or more voltage sensors (not shown in Figure 1) configured to sense voltage of the EES modules 6, 7.

The control module 50 is further configured to, for the series-connection of switching devices 1, 2, based on the obtained values, control at least one of:

(i) timing of switching the switching devices 1, 2 of the series-connection of switching devices between the operational states in relation to each other; or
(ii) timing of charging and/or discharging the EES modules 6, 7 of the respective ones of the switching device VBCs 3, 4 corresponding to the switching devices 1, 2 of the series-connection of switching devices,

such that any differences between the voltages of the EES modules 6, 7 of the switching device VBCs 3, 4 are decreased.

The switching device VBCs 3, 4 are connected to the respective switching devices 1, 2 of the series-connection of switching devices such that any differences between the voltages of the switching devices 1, 2 of the series-connection of switching devices in turn are decreased. As illustrated in Figure 1, each of the plurality of switching device VBCs 3, 4 may be connected in parallel with the respective switching device 1, 2 of the series-connection of switching devices.

By controlling one or more of the above-mentioned aspects (i) and (ii) such that any differences between the voltages of the EES modules 6, 7 of the switching device VBCs 3, 4 are decreased, voltages over (or of) the switching devices 1, 2 of the series-connection of switching devices may become balanced (e.g., so that the switching devices 1, 2 have equal or substantially equal voltage) during and after switching the switching devices 1, 2 from a first operational state to a second operational state, e.g., from a conducting state to a non-conducting state. Said controlling may be implemented as a closed loop control. By said controlling, it may be ensured that the voltages of the EES modules 6, 7 of the switching device VBCs 3, 4 converge to a certain voltage value.

The control module 50 may be further configured to, for each of the plurality of switching device VBCs 3, 4, on a condition that the voltage of the EES module 6, 7 of the switching device VBC 3, 4 exceeds a selected threshold voltage level, control the switching device VBC 3, 4 to discharge current from its corresponding EES module 6, 7 to the resistor 12, 13 of the resistive circuitry 10, 11 such that the voltage of the EES module 6, 7 is reduced so as to be below the selected threshold voltage level. By such possible additional controlling, it may be ensured that the voltage over each switching device 1, 2 of the series-connection of switching devices does not go beyond a certain value. Thus, by means of such additional controlling, the maximum voltage that each switching device 1, 2 of the series-connection of switching devices may be subjected to can be controlled, or limited. The maximum voltage is governed by the selected threshold voltage level. Thereby, it may be ensured that the total voltage of the EES modules 6, 7 does not exceed a selected voltage value. Such possible additional controlling may be implemented as a closed loop control.

In accordance with the embodiment of the present invention illustrated in Figure 1, the control module 50 is configured to control switching of each of the switching elements 14, 15 between the operational states. The controlling for each of the plurality of switching device VBCs 3, 4 to discharge current from its corresponding EES module 6, 7 to the resistor 12, 13 of the resistive circuitry 10, 11 may be effected by controlling switching of each of the switching elements 14, 15 between operational states.

For each of the plurality of switching device VBCs 3, 4, the switching element 14, 15, the resistor 12, 13 and the diode connected in series with the resistor 12, 13 may be considered to be an 'active' part of the switching device VBC 3, 4, which may govern the current path in the switching device VBCs 3, 4.

The diodes in the first one-way conducting circuitry 8, 9 may be required to conduct the current in the conductive path 5 only for a relatively short period of time, and therefore these diodes may be dimensioned to be (much) smaller compared to the diodes of the switching devices 1, 2. Further, the switching elements 14, 15 may only be switched to dissipate some energy from the EES modules 6, 7, Therefore, the switching elements 14, 15 may be dimensioned to be (much) smaller compared to the switching devices 1, 2. This is indicated in Figure 1 by the switching elements 14, 15 having a smaller size than the switching devices 1, 2 in Figure 1.

As mentioned, for the series-connection of switching devices 1, 2, timing of switching the switching devices 1, 2 of the series-connection of switching devices between the operational states in relation to each other may be controlled based on the obtained values. More specifically, after each switching event or instance of the switching devices 1, 2, the turn-on and turn-off delays may be manipulated for the next switching event or instance. Specifically, the two equations defined by the above-described relations between $V_i$, $V_2$ and the current $i_c$ in the conductive path 5 can be solved for time after every switching event or instance, and the result can be used to compensate the voltage differences in the next switching event or instance.

To that end, the control module 50 may be configured to, prior to the controlling of timing of switching the switching devices 1, 2 of the series-connection of switching devices between the operational states in relation to each other, control the switching devices 1, 2 to be switched from a first operational state to a second operational state of said operational states. The control module 50 may be configured to control timing of switching the switching devices 1, 2 of the series connection of switching devices between the operational states in relation to each other, based on any time difference between the time instants at which the switching devices 1, 2 of the series connection of switching devices attained the second operational state after having been controlled to be switched from the first operational state to the second operational state, such that any differences between the voltages of the EES modules 6, 7 of the switching device VBCs 3, 4 are decreased.

The above-mentioned time difference may be determined based on: (i) any difference between voltages of the EES modules 6, 7 of the switching device VBCs 3, 4 corresponding to the switching devices 1, 2 of the series connection of switching devices when in the second operational state after having been controlled to switch from the first operational state to the second operational state, and (ii) the current $i_c$ in the conductive path 5 during the switching of the switching devices 1, 2 of the series connection of switching devices from the first operational state to the second operational state. More specifically, the above-mentioned time difference may be determined based on a relation between (i) any difference between voltages of the EES modules 6, 7 of the switching device VBCs 3, 4 corresponding to the switching devices 1, 2 of the series connection of switching devices when in the second operational state after having been controlled to switch from the first operational state to the second operational state and (ii) an integration of the current $i_c$ in the conductive path 5 during the switching of the switching devices 1, 2 of the series connection of switching devices from the first operational state to the second operational state over time. Integration of the current $i_c$ in the conductive path 5 during the switching of the switching devices 1, 2 of the series-connection of switching devices from the first operational state to the second operational state over time may involve solving the two equations defined by the above-described relations between Vi, $V_2$ and the current $i_c$ in the conductive path 5 for time, which may be done every switching event or instance.

As mentioned, the current $i_c$ in the conductive path 5 may for example be sensed directly by means of one or more current sensors (not shown in Figure 1) configured to sense the current in the conductive path 5. In alternative or in addition, the current $i_c$ in the conductive path 5 could be derived or estimated based on one or more current sensors (not shown in Figure 1) configured to sense the load current $i_{load}$ which is indicated in Figure 1. The load current $i_{load}$ may be representative of a current of an electrical load or device connected or connectable to the apparatus 100.

By solving the two equations defined by the above-described relations between Vi, $V_2$ and the current $i_c$ in the conductive path 5 (which may be done every switching event or instance), turn-on and turn-off delays may be predicted. After such prediction, a compensation algorithm may be applied. Such a compensation algorithm may involve the following:

    (A) obtain (e.g., sense) the voltages $V_1$ and $V_2$ of the EES modules 6, 7 of the switching device VBCs 3, 4 after every switching event or instance;
    (B) determine the difference $\Delta V = V_1 - V_2$ between the voltages of the EES modules 6, 7 of the switching device VBCs 3, 4 each time the voltages of the EES modules 6, 7 of the switching device VBCs 3, 4 are obtained (in step A);
    (C) compare the $\Delta V = V_1 - V_2$ before and after the switching event or instance;
    (D) determine any time difference(s) between switching events or instances of the different switching devices 1, 2; and
    (E) use the determined time difference(s) to change turn-on/turn-off delays for the switching devices 1, 2 for the next switching event or instance.

As mentioned, for the series-connection of switching devices 1, 2, timing of charging and/or discharging the EES modules 6, 7 of the respective ones of the switching device VBCs 3, 4 corresponding to the switching devices 1, 2 of the series-connection of switching devices may be controlled (e.g., by the control module 50). More specifically, in alternative or in addition to manipulating the turn-on and turn-off delays for the next switching event or instance after each switching event or instance of the switching devices 1, 2 as described herein, any differences between the voltages of the EES modules 6, 7 of the switching device VBCs 3, 4 may be compensated for by shortening the voltage pulse of the EES module of the switching device VBCs that has the lowest voltage (while the current $i_c$ in the conductive path 5 is positive). This may ensure that the voltages of the EES modules 6, 7 of the switching device VBCs 3, 4 come closer to each other.

In accordance with the embodiment of the present invention illustrated in Figure 1, for each of the plurality of switching device VBCs 3, 4, the EES module 6, 7 of the switching device VBC 3, 4 is arranged in relation to the switching device 1, 2 corresponding to the switching device VBC 3, 4 such that by switching the at least one switching device 1, 2 between different operational states, the EES module 6, 7 of the switching device VBC 3, 4 can be selectively charged or discharged.

Prior to the controlling of the timing of charging and/or discharging the EES modules 6, 7 of the respective ones of the switching device VBCs 3, 4 corresponding to the switching devices 1, 2 of the series-connection of switching devices (e.g., by the control module 50), the switching devices 1, 2 of the series-connection of switching device may be controlled (e.g., by the control module 50) to be switched from a first operational state to a second operational state of the operational states. It may then be determined (I) which EES module(s) of the EES modules 6, 7 of the switching device VBCs 3, 4 corresponding to the switching devices 1, 2 of the series-connection of switching devices has or have a lowest voltage level when in the second operational state after the switching devices 1, 2 of the series-connection of switching devices have been controlled to switch from the first operational state to the second operational state. Subsequently, there may be determined (II) difference(s) between the lowest voltage level and voltage of the EES module of the other switching device VBC(s) corresponding to the switching devices of the series connection of switching devices when in the second operational state after the at least two of the switching devices have been controlled to switch from the first operational state to the second operational state. The above-mentioned operations (I) and (II) may for example be carried out by the control module 50.

Timing of charging and/or discharging the EES modules 6, 7 of the respective ones of the switching device VBCs 3, 4 corresponding to the switching devices 1, 2 of the series-connection of switching devices may then be controlled, by controlling (e.g., by the control module 50) timing of switching the switching devices 1, 2 of the series connection of switching devices between the operational states in relation to each other based on the difference(s) determined by the above-mentioned operation (II), such that any differences between the voltages of the EES modules 6, 7 of the respective ones of the switching device VBCs 3, 4 are decreased. Thereby, any differences between the voltages of the switching devices 1, 2 of the series-connection of switching devices can be decreased.

In alternative or in addition to the above-mentioned operations (I) and (II), there may be determined (III) an average voltage of the voltages of the EES modules 6, 7 of the switching device VBCs 3, 4 corresponding to the switching devices 1, 2 of the series-connection of switching devices when in the second operational state after the switching devices 1, 2 of the series-connection of switching devices having been controlled to switch from the first operational state to the second operational state. Subsequently, there may be determined (IV), for each of the switching device VBCs 3, 4 corresponding to the switching devices 1, 2 of the series-connection of switching devices, a difference between the voltage of the EES module 6, 7 of the switching device VBC 3, 4 and the average voltage (determined by the operation (III)). The above-mentioned operations (III) and (IV) may for example be carried out by the control module 50.

Timing of charging and/or discharging the EES modules 6, 7 of the respective ones of the switching device VBCs 3, 4 corresponding to the switching devices 1, 2 of the series-connection of switching devices may then be controlled, by controlling (e.g., by the control module 50) timing of switching the switching devices 1, 2 of the series-connection of switching devices between the operational states in relation to each other based on the differences determined by the above-mentioned operation (IV), such that any differences between the voltages of the EES modules 6, 7 of the respective ones of the switching device VBCs 3, 4 are decreased. Thereby, any differences between the voltages of the switching devices 1, 2 of the series-connection of switching devices can be decreased.

The above-mentioned operations (III) and (IV) may for example entail the following:

(A1) obtain (e.g., sense or measure) voltages of the EES modules 6, 7, $V_1$ and $V_2$, of the respective ones of the switching device VBCs 3, 4 (possibly, the obtained values of voltage may be filtered, e.g., using a selected time constant);
(A2) determine an average voltage (e.g., $V_{average} = (V_1 + V_2)/2$ in accordance with the embodiment of the present invention illustrated in Figure 1);
(A3) determine differences between the voltages of the EES modules 6, 7 and the average voltage (e.g., differences $e_1 = V_1 - V_{average}$ and $e_2 = V_2 - V_{average}$ in accordance with the embodiment of the present invention illustrated in Figure 1); and
(A4) make the upcoming discharges of the EES modules 6, 7 of the respective ones of the switching device VBCs 3, 4 shorter or longer based on the determined differences (from step A3), possibly using a proportional control action.

Figure 2 is a schematic view of an apparatus 100 according to an embodiment of the present invention. The apparatus 100 illustrated in Figure 2 is similar to the apparatus 100 illustrated in Figure 1, and the same reference numerals in Figures 1 and 2 denote the same or similar components or elements, having the same or similar function. Compared to the apparatus 100 illustrated in Figure 1, which comprises one series-connection of switching devices 1, 2, the apparatus 100 illustrated in Figure 2 comprises two series-connections of switching devices, with the two series-connections of switching devices being connected in parallel. As illustrated in Figure 2, the apparatus 100 comprises a first series-connection of switching devices 1, 2 and a second series-connection of switching devices 18, 19, with the first series-connection of switching devices 1, 2 and the second series-connection of switching devices 18, 19 being connected in parallel. It is to be understood that the apparatus 100 illustrated in Figure 2 could comprise more than two series-connections of switching devices, such as, for example three, four, five, six, eight, ten, twelve or more series-connections of switching devices. Each series-connection of switching devices may not necessarily include two switching devices, but may, in principle, comprise any number of switching devices.

As illustrated in Figure 2, the apparatus 100 comprises a plurality of switching device VBCs 3, 4, 16, 17 each of which corresponds to and is connected to a respective switching device 1, 2, 18, 19 of the two series-connections of switching devices. As illustrated in Figure 2, the switching device VBCs 3, 4, 16 and 17 correspond to the switching devices 1, 2, 18, and 19, respectively. The switching device VBCs 3 and 4 of the apparatus 100 illustrated in Figure 2 may be configured in the same or similar way as the switching device VBCs 3 and 4 of the apparatus 100 illustrated in Figure 1 and as described in the foregoing with reference to Figure 1 and may have the same or similar function.

The controlling for the series-connection of switching devices 1, 2 of the apparatus 100 illustrated in Figure 1 as described in the foregoing with reference to Figure 1 may be carried out in the same way or similarly for the series-connection of switching devices 1, 2 of the apparatus 100 illustrated in Figure 2. Such controlling may also be carried out in the same way or similarly for the series-connection of switching devices 18, 19 of the apparatus 100 illustrated in Figure 2. For example, the control module 50 may configured to control switching of each switching device 18, 19 of the series-connection of switching devices 18, 19 between the operational states and control operation of the switching device VBCs 16, 17 at least with respect to charging or discharging the corresponding EES module (not indicated by reference numerals in Figure 2).

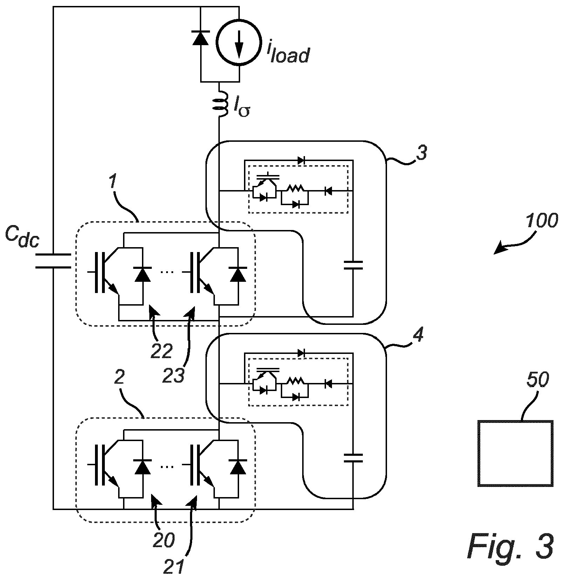

Figure 3 is a schematic view of an apparatus 100 according to an embodiment of the present invention. The apparatus 100 illustrated in Figure 3 is similar to the apparatus 100 illustrated in Figure 1, and the same reference numerals in Figures 1 and 3 denote the same or similar components or elements, having the same or similar function. Compared to the apparatus 100 illustrated in Figure 1, each of the switching devices 1 and 2 of the apparatus 100 illustrated in Figure 3 comprises a plurality of sub-switching devices connected in parallel. Each of the sub-switching devices may be controllably switchable between operational states including at least a conducting state and a non-conducting state. As illustrated in Figure 3, the switching device 1 comprises two sub-switching devices 22 and 23 connected in parallel, and the switching device 2 comprises two sub-switching devices 20 and 21 connected in parallel. It is to be understood that the number of sub-switching devices in each of the switching devices 1 and 2 is according to an example, and that any of the switching devices 1 and 2 could, in principle, comprise any number of sub-switching devices connected in parallel, and each of the sub-switching devices may be controllably switchable between operational states including at least a conducting state and a non-conducting state.

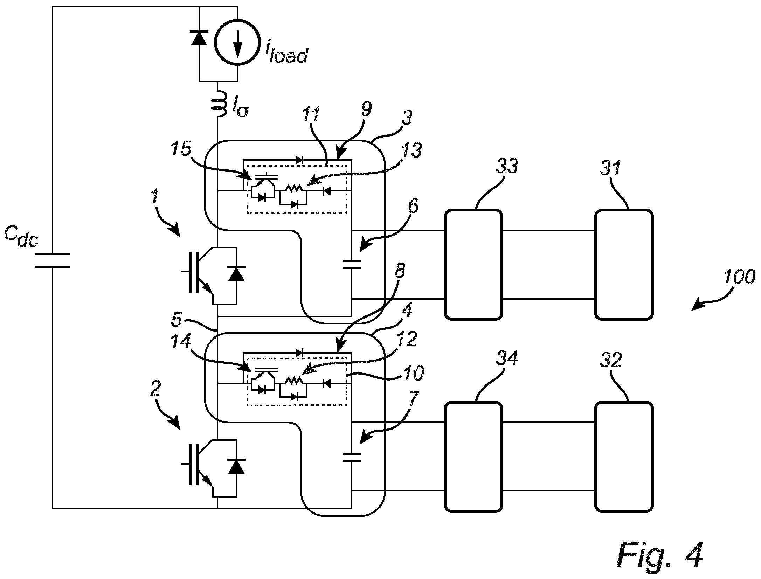

Figure 4 is a schematic view of an apparatus 100 according to an embodiment of the present invention. The apparatus 100 illustrated in Figure 4 is similar to the apparatus 100 illustrated in Figure 1, and the same reference numerals in Figures 1 and 4 denote the same or similar components or elements, having the same or similar function.

Generally, at least one switching device VBC of the plurality of switching device VBCs may be connected or connectable with an electrical device, wherein the at least one switching device VBC may be configured to selectively provide electrical energy from the EES module of the at least one switching device VBC to the electrical device.

In accordance with the embodiment of the present invention illustrated in Figure 4, each of switching device VBCs 3, 4 is connected with an electrical device 31, 32. As illustrated in Figure 4, the switching device VBC 3 is connected with the electrical device 31, and the switching device VBC 4 is connected with the electrical device 32. Further, in accordance with the embodiment of the present invention illustrated in Figure 4, the switching device VBCs 3 and 4 may be connected with the electrical devices 31 and 32, respectively, via converters 33 and 34, respectively. Each or any of the converters 33, 34 may for example comprise or be constituted by a DC-DC converter. The converters 33, 34 may be omitted, and hence the switching device VBCs 3 and 4 may be directly connected with the electrical devices 31 and 32, respectively.

The switching device VBC 3 may be configured to selectively provide electrical energy from the EES module 6 of the switching device VBC 3 to the electrical device 31, possibly via the converter 33. Similarly, the switching device VBC 4 may be configured to selectively provide electrical energy from the EES module 7 of the switching device VBC 4 to the electrical device 32, possibly via the converter 34.

In accordance with the embodiment of the present invention illustrated in Figure 4, energy in the EES modules 6, 7 of the switching device VBCs 3, 4 can be used to power electrical devices 31, 32 as needed or desired. Such functionality may be incorporated in any embodiment of the present invention.

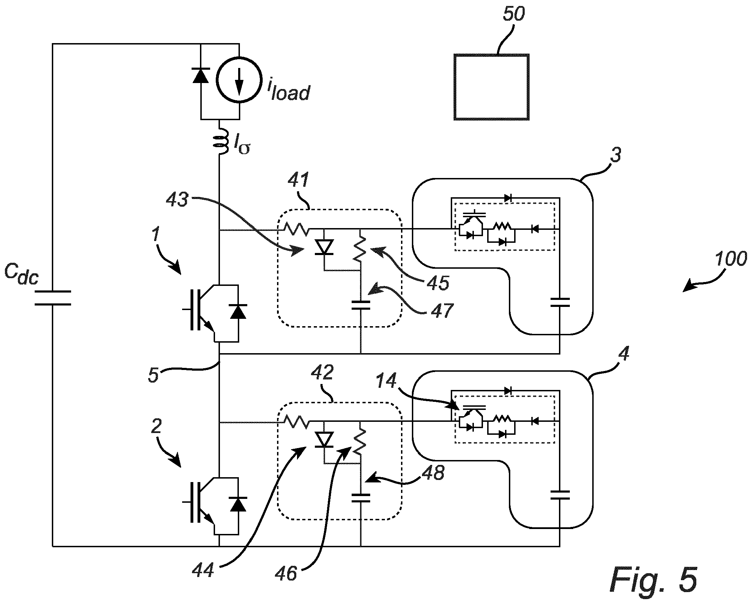

Figure 5 is a schematic view of an apparatus 100 according to an embodiment of the present invention. The apparatus 100 illustrated in Figure 5 is similar to the apparatus 100 illustrated in Figure 1, and the same reference numerals in Figures 1 and 5 denote the same or similar components or elements, having the same or similar function.

Generally, each of the plurality of switching device VBCs may be connected in parallel with snubber circuitry, which may comprise a series connection of (i) a parallel connection of one-way conducting circuitry and a resistive current path and (ii) at least one EES module. The snubber circuitry may be arranged between the switching device VBC and the switching device of the at least one series-connection of switching devices corresponding to the switching device VBC.

The apparatus 100 illustrated in Figure 5 differs from the apparatus 100 illustrated in Figure 1 in that each of the plurality of switching device VBCs 3, 4 is connected in parallel with snubber circuitry 41, 42 comprising a series connection of: (i) a parallel connection of one-way conducting circuitry 43, 44 and a resistive current path 45, 46, and (ii) at least one EES module 47, 48.

As illustrated in Figure 5, the switching device VBC 3 is connected in parallel with snubber circuitry 41 comprising a series connection of: (i) a parallel connection of one-way conducting circuitry 43 and a resistive current path 45, and (ii) at least one EES module 47. And the switching device VBC 4 is connected in parallel with snubber circuitry 42 comprising a series connection of: (i) a parallel connection of one-way conducting circuitry 44 and a resistive current path 46, and (ii) at least one EES module 48. Each of any of the one-way conducting circuitries 43 and 44 may for example comprise or be implemented by means of one or more diodes, as illustrated in Figure 5. Each or any of the resistive current paths 45 and 46 may for example comprise one or more resistors, as illustrated in Figure 5.

In accordance with the embodiment of the present invention illustrated in Figure 5, for each of the plurality of switching device VBCs 3, 4, the corresponding snubber circuitry 41, 42 may be arranged between the switching device VBC 3, 4 and the switching device 1, 2 of the at least one series-connection of switching devices 1, 2 corresponding to the switching device VBC 3, 4.

Snubber circuitries as illustrated in Figure 5 and described above with reference to Figure 5 may be incorporated or implemented in any embodiment of the present invention.

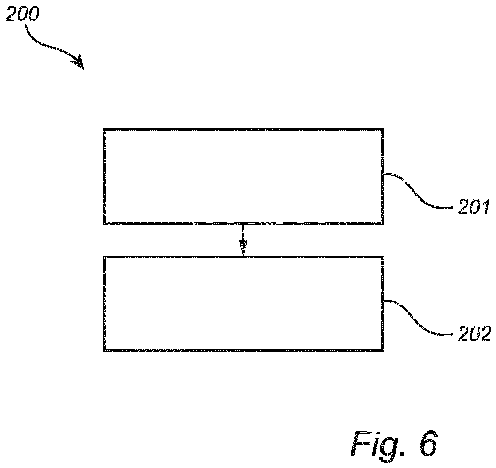

Figure 6 is a schematic flowchart of a method 600 according to an embodiment of the present invention. The method 600 is carried out in an apparatus comprising a plurality of interconnected switching devices, each of which is controllably switchable between operational states including at least a conducting state and a non-conducting state. At least two of the switching devices are connected in series so as to form at least one series-connection of switching devices. The apparatus is connected or connectable in a conductive path for conveying a current in the conductive path via the at least one series-connection of switching devices. The apparatus comprises a plurality of switching device VBCs for balancing of voltages over the switching devices of the at least one series-connection of switching devices during and after switching the switching devices from a first operational state to a second operational state. Each of the plurality of switching device VBCs comprises an EES module which can be (e.g., controllably) charged or discharged. Each of the plurality of switching device VBCs corresponds to and is connected to a respective switching device of the at least one series-connection of switching devices.

The method 200 comprises, for each series connection of switching devices of the at least one series-connection of switching devices: at 201 obtaining one or more values indicative of the voltage of each of the EES modules, and at 202, based on the obtained values, controlling at least one of: (i) timing of switching the switching devices of the series connection of switching devices between the operational states in relation to each other or (ii) timing of charging and/or discharging the EES modules of the respective ones of the switching device VBCs corresponding to the switching devices of the series connection of switching devices, such that any differences between the voltages of the EES modules of the switching device VBCs are decreased, wherein the switching device VBCs are connected to the respective switching devices of the series connection of switching devices such that any differences between the voltages of the switching devices of the series connection of switching devices thereby are decreased.

The method 200 may then end.

The method 200 may however be repeated a plurality of times so as to balance the voltages over the switching devices of the at least one series-connection of switching devices during and after switching the switching devices from a first operational state to a second operational state, over a period of time. The method 200 may be repeated until any differences between the voltages of the switching devices of the series connection of switching devices are not exceeding a threshold difference value.

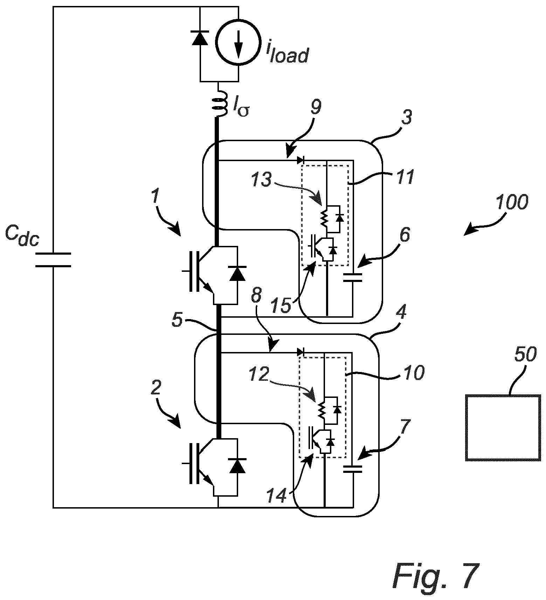

It is to be understood that the configurations of the switching device VBCs 3, 4 as illustrated in Figures 1-5 are according to examples, and that variations are possible. One example of a different configuration of the switching device VBCs 3, 4 is illustrated in Figure 7, which is a schematic view of an apparatus 100 according to an embodiment of the present invention. The apparatus 100 illustrated in Figure 7 is similar to the apparatus 100 illustrated in Figure 1, and the same reference numerals in Figures 1 and 7 denote the same or similar components or elements, having the same or similar function.

In accordance with the embodiment of the present invention illustrated in Figure 7, for each of the plurality of switching devices VBCs 3, 4, the resistive circuitry 10, 11 is connected in parallel with the EES module 6, 7. As illustrated in Figure 7, for the switching devices VBC 3, the resistive circuitry 11 is connected in parallel with the EES module 6, and for the switching devices VBC 4, the resistive circuitry 10 is connected in parallel with the EES module 7. For each of the plurality of switching devices VBCs 3, 4, the resistive circuitry 10, 11 may be connected to the first one-way conducting circuitry 8, 9 such as illustrated in Figure 7.

Just as in the apparatus 100 illustrated in Figure 1 and in accordance with the foregoing description referring to Figure 1, in the apparatus 100 illustrated in Figure 7 the switching elements 14, 15 of the switching devices VBCs 3, 4 can in the same manner or similarly be used to control the energy of the respective EES modules 6, 7. While the discharging paths of the EES modules 6, 7 differ between the apparatus 100 illustrated in Figure 1 and the apparatus 100 illustrated in Figure 7, the charging paths of the EES modules 6, 7 in the apparatus 100 illustrated in Figure 1 and in the apparatus 100 illustrated in Figure 7 are the same. The configuration of the switching device VBCs 3, 4 as illustrated in Figure 7 could be used in the apparatus 100 illustrated in any one of Figures 2-5 instead of the configuration of the switching device VBCs 3, 4 illustrated in those figures. The functionalities and operations of the apparatus 100 illustrated in Figure 1 and as described in the foregoing are also valid for the apparatus 100 illustrated in Figure 7.

In conclusion, an apparatus is disclosed, comprising a plurality of interconnected switching devices, at least two of which are connected in series so as to form at least one series-connection of switching devices, and a plurality of switching device VBCs for balancing of voltages over the switching devices of the at least one series-connection of switching devices during and after switching the switching devices from a first operational state to a second operational state. Each of the plurality of switching device VBCs comprises an EES module which can be controllably charged or discharged. Each of the plurality of switching device VBCs corresponds to a respective switching device of the at least one series-connection of switching devices. For each series-connection of switching devices, timing of switching the switching devices of the series-connection of switching devices between the operational states in relation to each other and/or timing of charging and/or discharging the EES modules of the respective ones of the switching device VBCs corresponding to the switching devices of the series connection of switching devices is/are controlled based on one or more values indicative of the voltage of each of the EES modules such that any differences between the voltages of the EES modules are decreased.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

**Claims**

1. An apparatus (100) comprising:

   a plurality of interconnected switching devices (1, 2) each of which is controllably switchable between operational states including at least a conducting state and a non-conducting state, wherein at least two of the switching devices are connected in series so as to form at least one series-connection of switching devices (1, 2; 18, 19), wherein the apparatus is connected or connectable in a conductive path (5) for conveying a current in the conductive path via the at least one series-connection of switching devices;
   a plurality of switching device voltage balancing circuits, VBCs, (3, 4; 16, 17) for balancing of voltages over the switching devices of the at least one series-connection of switching devices during and after switching the switching devices from a first operational state to a second operational state, wherein each of plurality of switching device VBCs comprises an electrical energy storage, EES, module (6, 7) which can be controllably charged or discharged, wherein each of the plurality of switching device VBCs corresponds to and is connected to a respective switching device of the at least one series-connection of switching devices;
   at least one control module (50) configured to control switching of each switching device of the at least one series-connection of switching devices between the operational states and control operation of the plurality of switching device VBCs at least with respect to charging or discharging the corresponding EES module;
   wherein the at least one control module is configured to, for each series connection of switching devices of the at least one series-connection of switching devices:

      obtain one or more values indicative of the voltage of each of the EES modules; and
      based on the obtained values, control at least one of: (i) timing of switching the switching devices of the series connection of switching devices between the operational states in relation to each other or (ii) timing of charging and/or discharging the EES modules of the respective ones of the switching device VBCs corresponding to the switching devices of the series connection of switching devices, such that any differences between the voltages of the EES modules of the switching device VBCs are decreased, wherein the switching device VBCs are connected to the respective switching devices of the series connection of switching devices such that any differences between the voltages of the switching devices of the series connection of switching devices in turn are decreased.

2. An apparatus according to claim 1, wherein each of the plurality of switching device VBCs comprises resistive circuitry (10, 11) comprising at least one resistor (12, 13), wherein each of the plurality of switching device VBCs is configured to selectively and controllably discharge current from its corresponding EES module through the resistive circuitry in order to reduce the voltage of the EES module;
   wherein the at least one control module is configured to, for each of the plurality of switching device VBCs, on a condition that the voltage of the EES module of the switching device VBC exceeds a selected threshold voltage level, control the switching device VBC to discharge current from its corresponding EES module to the at least one resistor of the resistive circuitry such that the voltage of the EES module is reduced so as to be below the selected threshold voltage level.

3. An apparatus according to claim 2, wherein the selected threshold voltage level is the same for each switching device VBC.

4. An apparatus according to any one of claims 1-3, wherein each of the plurality of switching device VBCs is connected in parallel with the respective switching device of the at least one series-connection of switching devices.

5. An apparatus according to any one of claims 1-4, wherein each of the plurality of switching device VBCs further comprises a first one-way conducting circuitry (8, 9) and a second one-way conducting circuitry (10, 11) connected in parallel with the first one-way conducting circuitry, wherein the parallel connection of the first one-way conducting circuitry and the second one-way conducting circuitry is connected in series with the EES module of the switching device VBC, and wherein the first one-way conducting circuitry and the second one-way conducting circuitry are configured to conduct current in opposite directions, and wherein one of the first one-way conducting circuitry and the second one-way conducting circuitry comprises at least one resistor (12, 13).

6. An apparatus according to claim 5, wherein one of the first one-way conducting circuitry and the second one-way conducting circuitry is configured to selectively and controllably permit current to be conducted through the first one-way conducting circuitry or second one-way conducting circuitry, respectively.

7. An apparatus according to claim 5 or 6, wherein the one of the first one-way conducting circuitry and the second one-way conducting circuitry comprises a series connection of at least one switching element (14, 15) and at least one resistor (12, 13), wherein each of the at least one switching element is controllably switchable between operational states including at least a conducting state and a non-conducting state, wherein the at least one control module is configured to control switching of the at least one switching element between the operational states.

8. An apparatus according to claim 7, wherein the first one-way conducting circuitry and the second one-way conducting circuitry are arranged in relation to the EES module of the switching device VBC so that by switching the at least one switching element between different operational states, the EES module of the switching device VBC can be selectively and controllably discharged via the one of the first one-way conducting circuitry and the second one-way conducting circuitry and selectively and controllably charged via the other one of the first one-way conducting circuitry and the second one-way conducting circuitry, whereby timing of charging and/or discharging the EES module of the switching device VBC is controllable by the at least one control module.

9. An apparatus according to any one of claims 1-8, comprising at least two series-connections of switching devices (1, 2; 18, 19), the at least two series-connections of switching devices being connected in parallel.

10. An apparatus according to any one of claims 1-9, wherein at least one switching device (1, 2) of the at least one series-connection of switching devices comprises a plurality of sub-switching devices (20, 21, 22, 23) connected in parallel, each of the sub-switching devices being controllably switchable between operational states including at least a conducting state and a non-conducting state.

11. An apparatus according to any one of claims 1-10, wherein the at least one control module is configured to, prior to the controlling of timing of switching the switching devices of the series connection of switching devices between the operational states in relation to each other, control the switching devices to be switched from a first operational state to a second operational state of said operational states;

wherein the at least one control module is configured to control timing of switching the switching devices of the series connection of switching devices between the operational states in relation to each other, based on any time difference between the time instants at which the switching devices of the series connection of switching devices attained the second operational state after having been controlled to be switched from the first operational state to the second operational state, such that any differences between the voltages of the EES modules of the switching device VBCs are decreased;
with said time difference being determined based on: (i) any difference between voltages of the EES modules of the switching device VBCs corresponding to the switching devices of the series connection of switching devices when in the second operational state after having been controlled to switch from the first operational state to the second operational state, and (ii) the current in the conductive path during the switching of the switching devices of the series connection of switching devices from the first operational state to the second operational state.

12. An apparatus according to claim 11, with said time difference being determined based on a relation between (i) any difference between voltages of the EES modules of the switching device VBCs corresponding to the switching devices of the series connection of switching devices when in the second operational state after having been controlled to switch from the first operational state to the second operational state and (ii) an integration of the current in the conductive path during the switching of the switching devices of the series connection of switching devices from the first operational state to the second operational state over time.

13. An apparatus according to any one of claims 1-12, wherein for each of the plurality of switching device VBCs, the EES module of the switching device VBC is arranged in relation to the switching device corresponding to the switching device VBC such that by switching the at least one switching device between different operational states, the EES module of the switching device VBC can be selectively charged or discharged;

wherein the at least one control module is configured to, prior to the controlling of timing of discharging the EES modules of the respective ones of the switching device VBCs corresponding to the switching devices of the series connection of switching devices:

control the switching devices of the series connection of switching devices to be switched from a first operational state to a second operational state of said operational states;
determine which EES module(s) of the EES modules of the switching device VBCs corresponding to the switching devices of the series connection of switching devices has or have a lowest voltage level when in the second operational state after the switching devices of the series connection of switching devices have been controlled to switch from the first operational state to the second operational state; and
determine difference(s) between the lowest voltage level and voltage of the EES module of the other switching device VBC(s) corresponding to the switching devices of the series connection of switching devices when in the second operational state after the at least two of the switching devices have been controlled to switch from the first operational state to the second operational state;
wherein the at least one control module is configured to control the timing of charging and/or discharging the EES modules of the respective ones of the switching device VBCs corresponding to the switching devices of the series connection of switching devices by controlling timing of switching the switching devices of the series connection of switching devices between the operational states in relation to each other based on said determined difference(s), such that any differences between the voltages of the EES modules of the respective ones of the switching device VBCs are decreased, whereby any differences between the voltages of the switching devices of the series connection of switching devices are decreased.

14. An apparatus according to any one of claims 1-12 wherein for each of the plurality of switching device VBCs, the EES module of the switching device VBC is arranged in relation to the switching device corresponding to the switching device VBC such that by switching the at least one switching device between different operational states, the EES module of the switching device VBC can be selectively charged or discharged;

wherein the at least one control module is configured to, prior to the controlling of timing of discharging the EES modules of the respective ones of the switching device VBCs corresponding to the switching devices of the series connection of switching devices:

control the switching devices of the series connection of switching devices to be switched from a first operational state to a second operational state of said operational states;
determine an average voltage of the voltages of the EES modules of the switching device VBCs corresponding to the switching devices of the series connection of switching devices when in the second operational state after the switching devices of the series connection of switching devices having been controlled to switch from the first operational state to the second operational state; and
for each of the switching device VBCs corresponding to the switching devices of the series connection of switching devices, determine a difference between the voltage of the EES module of the switching device VBC and the average voltage;
wherein the at least one control module is configured to control the timing of charging and/or discharging the EES modules of the respective ones of the switching device VBCs corresponding to the switching devices of the series connection of switching devices by controlling timing of switching the switching devices of the series connection of switching devices between the operational states in relation to each other based on said determined differences such that any differences between the voltages of the EES modules of the respective ones of the switching device VBCs are decreased, whereby any differences between the voltages of the switching devices of the series connection of switching devices are decreased.

15. An apparatus according to any one of claims 1-14, wherein at least one switching device VBC of the plurality of switching device VBCs is connected or connectable with an electrical device (31, 32), wherein the at least one switching device VBC is configured to selectively provide electrical energy from the EES module of the at least one switching device VBC to the electrical device.

**16.** An apparatus according to any one of claims 1-15, wherein each of the plurality of switching device VBCs is connected in parallel with snubber circuitry (41, 42) comprising a series connection of (i) a parallel connection of one-way conducting circuitry (43, 44) and a resistive current path (45, 46) and (ii) at least one EES module (47, 48).

**17.** An apparatus according to claim 16, wherein the snubber circuitry is arranged between the switching device VBC and the switching device of the at least one series-connection of switching devices corresponding to the switching device VBC.

**18.** A method (200) in an apparatus comprising a plurality of interconnected switching devices each of which is controllably switchable between operational states including at least a conducting state and a non-conducting state, wherein at least two of the switching devices are connected in series so as to form at least one series-connection of switching devices, wherein the apparatus is connected or connectable in a conductive path for conveying a current in the conductive path via the at least one series-connection of switching devices, the apparatus further comprising a plurality of switching device voltage balancing circuits, VBCs, for balancing of voltages over the switching devices of the at least one series-connection of switching devices during and after switching the switching devices from a first operational state to a second operational state, wherein each of the plurality of switching device VBCs comprises an electrical energy storage, EES, module which can be controllably charged or discharged, wherein each of the plurality of switching device VBCs corresponds to and is connected to a respective switching device of the at least one series-connection of switching devices, the method comprising, for each series connection of switching devices of the at least one series-connection of switching devices:

obtaining (201) one or more values indicative of the voltage of each of the EES modules; and based on the obtained values, controlling (202) at least one of: (i) timing of switching the switching devices of the series connection of switching devices between the operational states in relation to each other or (ii) timing of charging and/or discharging the EES modules of the respective ones of the switching device VBCs corresponding to the switching devices of the series connection of switching devices, such that any differences between the voltages of the EES modules of the switching device VBCs are decreased, wherein the switching device VBCs are connected to the respective switching devices of the series connection of switching devices such that any differences between the voltages of the switching devices of the series connection of switching devices thereby are decreased.

**19.** A computer program comprising instructions, which when executed by one or more processors comprised in at least one control module, cause the at least one control module to perform a method according to claim 18.

*Fig. 1*

Fig. 2

Fig. 3

Fig. 4

Fig. 5

*200*

— *201*

— *202*

*Fig. 6*

*Fig. 7*

Europäisches Patentamt
European Patent Office
Office européen des brevets

# EUROPEAN SEARCH REPORT

**Application Number**

EP 23 16 1481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE INHWAN ET AL: "Voltage Balancing Control with Capacitor Charging Method for Series Connected SiC MOSFET Submodules", 2020 IEEE ENERGY CONVERSION CONGRESS AND EXPOSITION (ECCE), IEEE, 11 October 2020 (2020-10-11), pages 3125-3130, XP033850687, DOI: 10.1109/ECCE44975.2020.9235723 [retrieved on 2020-10-21] | 1,4,9, 10,14, 18,19 | INV. H02M1/34 |
| Y | * figures 1-2 * <br> * figure 4 * | 2,3,5-8, 15-17 | |
| A | * page 3125 - page 3127 * <br> ----- | 11-13 | |
| Y | CN 111 293 878 A (UNIV ZHEJIANG) 16 June 2020 (2020-06-16) | 2,3,5-8 | |
| A | * figures 4,5 * <br> * paragraph [0042] - paragraph [0046] * <br> ----- | 1,4,9-19 | |
| A | US 2022/038010 A1 (SHAO SHUAI [CN] ET AL) 3 February 2022 (2022-02-03) <br> * figures 1-2 * <br> * figure 5 * <br> * paragraph [0030] - paragraph [0033] * <br> * paragraph [0038] - paragraph [0042] * <br> ----- | 1-19 | |
| Y | US 2005/041348 A1 (ITO HIROSHI [JP] ET AL) 24 February 2005 (2005-02-24) <br> * figure 13 * <br> * paragraph [0105] - paragraph [0106] * <br> ----- | 15 | **TECHNICAL FIELDS SEARCHED (IPC)** <br><br> H02M |

-/--

The present search report has been drawn up for all claims

| Place of search | Date of completion of the search | Examiner |
|---|---|---|
| The Hague | 18 August 2023 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 23 16 1481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RUCHIRA WITHANAGE ET AL: "Series Connection of Insulated Gate Bipolar Transistors (IGBTs)", IEEE TRANSACTIONS ON POWER ELECTRONICS, INSTITUTE OF ELECTRICAL AND ELECTRONICS ENGINEERS, USA, vol. 27, no. 4, 1 April 2012 (2012-04-01), pages 2204-2212, XP011422904, ISSN: 0885-8993, DOI: 10.1109/TPEL.2011.2167000 * figure 1 * | 16,17 | |
| A | YANG LEI ET AL: "A Module-Based Self-Balancing Series Connection for IGBTs", IEEE TRANSACTIONS ON INDUSTRIAL ELECTRONICS, IEEE SERVICE CENTER, PISCATAWAY, NJ, USA, vol. 68, no. 10, 10 September 2020 (2020-09-10), pages 9410-9419, XP011864323, ISSN: 0278-0046, DOI: 10.1109/TIE.2020.3021637 [retrieved on 2021-06-30] * figures 1-3 * | 1-19 | TECHNICAL FIELDS SEARCHED (IPC) |

The present search report has been drawn up for all claims

| Place of search | Date of completion of the search | Examiner |
|---|---|---|
| The Hague | 18 August 2023 | Riehl, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# ANNEX TO THE EUROPEAN SEARCH REPORT
# ON EUROPEAN PATENT APPLICATION NO.

EP 23 16 1481

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2023

| Patent document cited in search report | | Publication date | Patent family member(s) | | Publication date |
|---|---|---|---|---|---|
| CN 111293878 | A | 16-06-2020 | NONE | | |
| US 2022038010 | A1 | 03-02-2022 | CN | 111917320 A | 10-11-2020 |
| | | | US | 2022038010 A1 | 03-02-2022 |
| US 2005041348 | A1 | 24-02-2005 | CA | 2361291 A1 | 13-05-2002 |
| | | | JP | 2002208850 A | 26-07-2002 |
| | | | US | 2002057540 A1 | 16-05-2002 |
| | | | US | 2003210509 A1 | 13-11-2003 |
| | | | US | 2005041348 A1 | 24-02-2005 |

EPO FORM P0459

For more details about this annex : see Official Journal of the European Patent Office, No. 12/82